# EUROPÄISCHE PATENTANMELDUNG

(11) **EP 2 058 917 A2**
(43) Veröffentlichungstag der Anmeldung: **13.05.2009**
(21) Anmeldenummer: 08017687.8
(22) Anmeldetag: 09.10.2008
(51) Int. Cl.: H02J 7/00

(54) **Verfahren zum Laden von wiederaufladbaren Lithium-Akkumulatoren, Ladegerät und Lithium-Akkumulator**

(30) Priorität: 16.10.2007 DE 102007051052
(71) Anmelder: C. & E. Fein GmbH, 73529 Schwäbisch Gmünd-Bargau (DE)
(72) Erfinder: Barza, Radu, 73540 Heubach (DE); Schreiber, Alfred, 73230 Kirchheim (DE)
(74) Vertreter: Gahlert, Stefan

(57) **Zusammenfassung**

Ein Verfahren und ein Ladegerät (12) dienen zum Laden von wiederaufladbaren Lithium-Akkumulatoren (10). Ein Ladestrom (I) wird in den Akkumulator (10) eingespeist, und während der Einspeisung wird die Spannung (U) am Akkumulator (10) überwacht. Zusätzlich wird die zeitliche Änderung mindestens einer der den Akkumulator (10) charakterisierenden Zustandsgrößen überwacht und der Ladestrom (I) weiter in den Akkumulator (10) eingespeist, bis die zeitliche Änderung der Zustandsgröße einen vorgegebenen Grenzwert überschreitet (Fig. 3).

## Beschreibung

Die Erfindung betrifft ein Verfahren zum Laden von wiederaufladbaren Lithium-Akkumulatoren, bei dem ein Ladestrom in den Akkumulator eingespeist und während der Einspeisung die Spannung am Akkumulator überwacht wird.

Die Erfindung betrifft ferner ein Ladegerät zum Laden von wiederaufladbaren Lithium-Akkumulatoren, mit ersten Mitteln zum Einspeisen eines Ladestroms in den Akkumulator, und mit zweiten Mitteln zum Überwachen der Spannung am Akkumulator während der Einspeisung.

Die Erfindung betrifft schließlich einen Lithium-Akkumulator, mit ersten Mitteln zum Anschließen des Akkumulators an ein Ladegerät und mit zweiten Mitteln zum Überwachen der Spannung am Akkumulator während der Einspeisung eines Ladestroms.

Ein Verfahren, ein Ladegerät und ein Lithium-Akkumulator der vorstehend genannten Art sind aus der DE 198 38 137 A1 bekannt.

Für mobile Anwendungen werden heutzutage Akkumulatoren, so genannte "Akkupacks", unterschiedlicher Art verwendet, beispielsweise Nickel-Kadmium-Akkus (NiCd), Nickel-Metallhydrid-Akkus (NiMH) und Lithium-Ionen-Akkus. Bei Letzteren sind Akkus mit unterschiedlichen Metallen (Mn, Ni, Co, Ti) in diversen Kombinationen bekannt. Für elektronische Geräte, beispielsweise tragbare Computer, werden LiCoO₂-Akkus verwendet, für den im Rahmen der vorliegenden Erfindung besonders interessierenden Anwendungsfall bei Elektrowerkzeugen sind Akkus vom Typ LiMn₂O₄, LiNiO₂, LiTi₅O₁₂, LiNi₁₋ₓCoₓO₂ und dgl. im Einsatz. Diese Akkus besitzen eine Zell-Nennspannung zwischen 3,6 und 3,7 V. In jüngster Zeit sind ferner Lithium-Ionen-Akkus vom Typ Lithium-Eisen-Phosphat bekannt geworden, deren Zell-Nennspannung 3,3 V beträgt.

Bei wiederaufladbaren Akkumulatoren besteht das generelle Problem, dass beim Aufladen eine Überladung verhindert werden muss. Die oben aufgezählten Akkumulatoren sind, je nach Bauart, unterschiedlich empfindlich gegen Überladung.

Lithium-Ionen-Akkus sind gegen Überladung sehr empfindlich und können im Extremfall bei Überladung in Brand geraten oder gar explodieren. Andererseits ist man im Interesse einer möglichst langen Betriebsdauer der mit den Akkumulatoren zu betreibenden Geräte daran interessiert, den Akkumulator möglichst vollständig zu laden, d.h. seine Kapazität möglichst voll auszunutzen.

Ebenso sind Akkumulatoren unterschiedlich empfindlich gegen vollständige Entladung, die bei einigen Bauarten zur Zerstörung des Akkumulators führen kann.

Um zu verhindern, dass Akkumulatoren beim Aufladen und beim Entladen Schaden nehmen, sind viele Kriterien entwickelt worden, um durch geeignete Steuerung der Stromzufuhr eine Überladung und eine vollständige Entladung zu verhindern. So müssen z.B. die Zahl der Zellen und die Ladeparameter (Ladeschlussspannung) bekannt sein. Diese Kriterien sind in der Praxis mitunter nur mit hohem Aufwand zu realisieren. Da andererseits Akkumulatoren zunehmend als Billigartikel betrachtet werden, muss der Zielkonflikt zwischen der Effektivität des Schutzes des Akkumulators einerseits und den dabei entstehenden Kosten andererseits gelöst werden.

Im Rahmen der vorliegenden Erfindung sind Lithium-Akkumulatoren von Interesse, die, wie erwähnt, empfindlich gegen Überladung sind. Das aus der eingangs genannten DE 198 38 137 A1 bekannte Verfahren, das für den Spezialfall des transkutanen Ladens eines Akkumulators eines im menschlichen Körper befindlichen Implantats vorgesehen ist, ist zwar aus naheliegenden Gründen hinsichtlich des Akkumulators betriebssicher, schöpft aber die mögliche Kapazität des Akkumulators nicht aus.

Der Erfindung liegt daher die Aufgabe zugrunde, ein Verfahren und ein Ladegerät der eingangs genannten Art dahingehend weiterzubilden, dass die vorstehend erläuterten Nachteile des Standes der Technik vermieden werden. Insbesondere soll es möglich werden, dass ohne Kenntnis der Kennwerte des Akkupacks (z.B. Anzahl der Zellen, Kapazität) ein Laden möglich ist. Weiter sollen eine Verfahren und ein Ladegerät zur Verfügung gestellt werden, mit denen die mögliche Kapazität des Lithium-Akkumulators voll ausgeschöpft wird, ohne dass dies zu einer Schädigung des Akkumulators führen kann. Außerdem soll eine kürzere Ladezeit erreicht werden.

Bei einem Verfahren der eingangs genannten Art wird diese Aufgabe erfindungsgemäß dadurch gelöst, dass die zeitliche Änderung mindestens einer der den Akkumulator charakterisierenden Zustandsgrößen überwacht und der Ladestrom weiter in den Akkumulator eingespeist wird, bis die zeitliche Änderung der Zustandsgröße einen vorgegebenen Grenzwert überschreitet.

Bei einem Ladegerät der eingangs genannten Art wird die Aufgabe erfindungsgemäß dadurch gelöst, dass dritte Mittel zum zusätzlichen Überwachen der zeitlichen Änderung mindestens einer der den Akkumulator charakterisierenden Zustandsgrößen vorgesehen sind und dass vierte Mittel vorgesehen sind, die den Ladestrom weiter in den Akkumulator einspeisen, bis die zeitliche Änderung der Zustandsgröße einen vorgegebenen Grenzwert überschreitet.

Bei einem Lithium-Akkumulator der eingangs genannten Art wird die Aufgabe erfindungsgemäß dadurch gelöst, dass dritte Mittel zum zusätzlichen Überwachen der zeitlichen Änderung mindestens einer der den Akkumulator charakterisierenden Zustandsgrößen vorgesehen sind und dass die dritten Mittel ein Signal zur Abgabe an das Ladegerät erzeugen, um den Ladestrom weiter in den Akkumulator einzuspeisen, bis die zeitliche Änderung der Zustandsgröße einen vorgegebenen Grenzwert überschreitet.

Die der Erfindung zugrunde liegende Aufgabe wird auf diese Weise vollkommen gelöst.

Es ist nämlich das Verdienst des Erfinders, erkannt zu haben, dass bei Lithium-Akkus eine gewisse Ladung über den bislang bekannten Punkt hinaus, beispielsweise wenn die Spannung bei konstantem Ladestrom einen vorgegebenen Schwellwert erreicht, eingespeist werden kann, solange man beachtet, dass die zeitliche Änderung bestimmter Parameter unter einem ihr zugeordneten Schwellwert bleibt.

Ein weiterer Vorteil der Erfindung ist, dass schadhafte Zellen nicht zum Überladen des Akkus führen. Sollte nämlich z.B. bei einem 18 V-Akku eine Zelle defekt sein, würde der Akku bei herkömmlicher Vorgehensweise lediglich auf 16,8 V aufgeladen.

Bei dem erfindungsgemäßen Verfahren wird vorzugsweise zunächst der Ladestrom entlang eines vorgegebenen Verlaufs geführt, insbesondere konstant gehalten oder periodisch geformt, beispielsweise gepulst, bis die Spannung einen vorgegebenen Grenzwert erreicht.

Bei einer ersten Variante des erfindungsgemäßen Verfahrens wird die zeitliche Änderung der Spannung überwacht.

Diese besonders bevorzugte Variante hat sich in Versuchen als besonders effektiv erwiesen.

Bei einer zweiten Variante des erfindungsgemäßen Verfahrens wird demgegenüber die zeitliche Änderung der Temperatur des Akkumulators überwacht.

Bei einer dritten Variante des erfindungsgemäßen Verfahrens wird schließlich die zeitliche Änderung des Innenwiderstandes des Akkumulators überwacht.

Besonders bevorzugt ist dabei, wenn mindestens zwei Zustandsgrößen des Akkumulators gleichzeitig überwacht werden und der Ladestrom weiter in den Akkumulator eingespeist wird, bis eine der zeitlichen Änderungen der mindestens zwei Zustandsgrößen als erste den ihr zugeordneten vorgegebenen Grenzwert überschreitet.

Diese Maßnahme hat den Vorteil, dass ein besonders sicherer Ladevorgang realisiert werden kann, indem beispielsweise gemäß der oben genannten ersten Variante die zeitliche Änderung der Spannung, gleichzeitig aber auch die zeitliche Änderung der Temperatur überwacht wird, so dass der Ladevorgang auch dann abgebrochen wird, wenn zwar die zeitliche Änderung der Spannung noch nicht den Grenzwert erreicht hat, der Akkumulator aber, beispielsweise infolge sehr hoher Umgebungstemperatur, bereits sein thermisches Limit erreicht hat.

Besonders bevorzugt bei den vorgenannten Varianten ist, wenn als zeitliche Änderung der zeitliche Anstieg überwacht wird.

Bei einer ersten Variante eines erfindungsgemäßen Ausführungsbeispiels wird der Ladestrom abgeschaltet, wenn die zeitliche Änderung der Zustandsgröße den vorgegebenen Grenzwert überschreitet.

Diese Maßnahme hat den Vorteil, dass der Ladevorgang relativ schnell abgeschlossen werden kann.

Bei einer zweiten Variante eines erfindungsgemäßen Ausführungsbeispiels wird hingegen der Ladestrom allmählich gegen Null vermindert, wenn die zeitliche Änderung der Zustandsgröße den vorgegebenen Grenzwert überschreitet.

Diese Maßnahme hat den Vorteil, dass unter Inkaufnahme eines gewissen zusätzlichen Zeitbedarfs der Ladevorgang noch schonender für den Akkumulator ausgeführt werden kann.

Obwohl die Erfindung grundsätzlich für Lithium-Ionen-Akkus beliebiger Bauart einsetzbar ist, wird besonders bevorzugt ein Lithium-Eisen-Phosphat-Akkumulator geladen.

Diese Maßnahme hat den Vorteil, dass eine Bauart von Lithium-Ionen-Akkus verwendet wird, die hinsichtlich Überladung im Vergleich zu anderen Bauarten von Lithium-Ionen-Akkus weniger empfindlich ist.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1:: ein schematisiertes Schaltbild eines Akkumulators, der an ein Ausführungsbeispiel eines erfindungsgemäßen Ladegeräts angeschlossen ist;
- Figur 2:: graphische Darstellungen von Verläufen des Stroms, der Spannung und der Ladung beim Laden eines Lithium-Ionen-Akkus nach dem Stand der Technik;
- Figur 3:: eine Darstellung ähnlich Figur 2, jedoch für ein Ausführungsbeispiel eines erfindungsgemäßen Verfahrens, das zum Laden eines ersten Lithium-Eisen-Phosphat-Akkus verwendet wird;
- Figur 4:: eine Darstellung wie Figur 3, jedoch für das Ausführungsbeispiel des erfindungsgemäßen Verfahrens, das zum Laden eines zweiten Lithium-Eisen-Phosphat-Akkus verwendet wird.

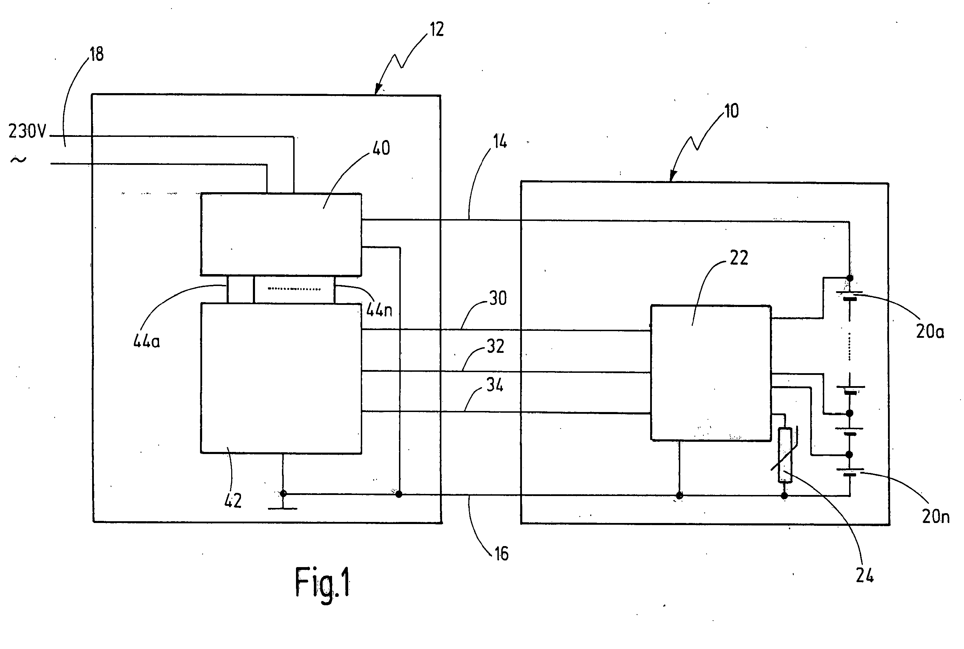

In Figur 1 bezeichnet 10 einen Akkumulator, der umgangssprachlich auch als "Akkupack" bezeichnet wird. Der Akkumulator ist ein Lithium-Ionen-Akkumulator, vorzugsweise ein Lithium-Eisen-Phosphat-Akkumulator.

Der Akkumulator 10 ist an ein Ladegerät 12 angeschlossen. Die Verbindung zwischen Ladegerät 12 und Akkumulator 10 wird über eine Plusleitung 14 und eine Masseleitung 16 hergestellt. Das Ladegerät 12 ist über eine Netzleitung 18 an ein Netz, beispielsweise ein 230 V Wechselstromnetz, angeschlossen.

In dem Akkumulator 10 befinden sich n Zellen 20a-20n in Reihenschaltung. Die Zellen 20a-20n stehen mit einer Überwachungselektronik 22 in Verbindung. In räumlicher Nähe zu den Zellen 22a-22n befindet sich ein Temperatursensor 24, beispielsweise ein NTC-Widerstand, der ebenfalls an die Überwachungselektronik 22 angeschlossen ist.

In der Überwachungselektronik 22 sind geeignete Mittel vorgesehen, um Signale zu bilden, die dem Ladestrom I, der Ladespannung U, dem Innenwiderstand Rᵢ der Zellen 22a-22n, der Temperatur T der Zellen 22a-22n und ggf. weiteren Parametern entsprechen, die für den Ladezustand des Akkumulators charakteristisch sind. Insbesondere ist die Überwachungselektronik 22 in der Lage, auch die zeitliche Änderung, d.h. die erste zeitliche Ableitung dieser Parameter, zu erfassen und entsprechende Signale zu bilden, also beispielsweise dU/dt, dI/dt, dT/dt und dRᵢ/dt. Vorzugsweise wird der zeitliche Anstieg der genannten Parameter überwacht.

Die Überwachungselektronik 22 kann sich alternativ auch im Ladegerät 12 befinden.

Ferner kann die Überwachungselektronik 22 aus diesen Signalen sekundäre Signale bilden, die beispielsweise einen Alarmzustand der Zellen 22a-22n melden, also zum Beispiel einen Zustand drohender Überladung, drohender vollständiger Unterladung, Überspannung, Überstrom, Übererhitzung usw. Die so ermittelten bzw. aufbereiteten Signale werden dem Ladegerät 12 über Signalleitungen 30, 32 und 34 übermittelt.

In dem Ladegerät 12 befinden sich ein Schaltnetzteil 40 sowie eine Steuerelektronik 42, die über eine Mehrzahl von Steuerleitungen 44a-44n miteinander verbunden sind. Die Steuerelektronik 42 empfängt über die Signalleitungen 30, 32 und 34 die oben erläuterten Signale und stellt über das Schaltnetzteil 40 den Ladestrom I so ein, wie es das erfindungsgemäße Verfahren vorsieht.

Wenn die Überwachungselektronik 22 in der oben beschriebenen Weise ein Signal bildet, das einen Alarmzustand der Zellen 22a-22n darstellt, dann bewirkt dieses Signal, dass das Ladegerät 12 insgesamt abgeschaltet wird. Hierzu liegt beispielsweise auf der Signalleitung 30 ein Signal "0" an, wenn kein Alarmzustand erkannt wird, und ein endliches Spannungssignal "1" von beispielsweise +18 V, wenn ein Alarmzustand erkannt wird, beispielsweise eine drohende Überladung oder auch eine drohende vollständige Entladung.

Die Überwachungselektronik 22 kann, wie in Figur 1 dargestellt, in dem Akkumulator 10 angeordnet sein. Alternativ ist es jedoch auch möglich, mindestens einen Teil der Überwachungselektronik außerhalb des Akkumulators 10 unterzubringen, beispielsweise in dem Ladegerät 12.

In diesem Zusammenhang ist zu erwähnen, dass diese Alarmabschaltung auch dann verwendet werden kann, wenn der Akkumulator 10 an einen Verbraucher angeschlossen ist, beispielsweise ein Elektrowerkzeug. Wenn im Betrieb des Verbrauchers der Akkumulator 10 vollständig entladen zu werden droht, dann bewirkt das Alarmsignal über eine entsprechende Verbindung zum Verbraucher, dass dieser abgeschaltet wird.

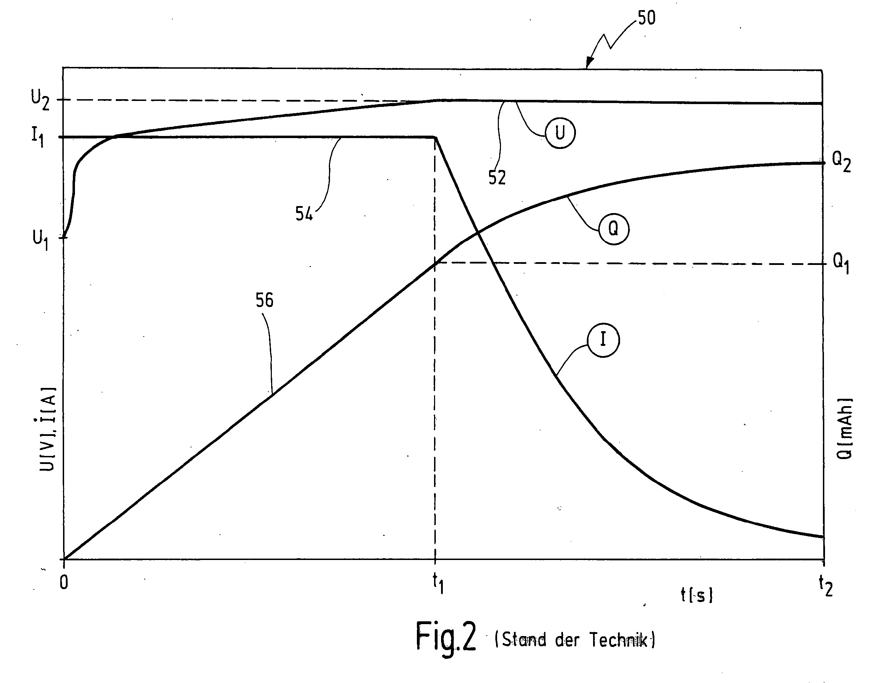

Figur 2 zeigt ein erstes Diagramm nach dem Stand der Technik, das drei zeitliche Verläufe darstellt, nämlich einen Verlauf 52 der Ladespannung U, einen Verlauf 54 des Ladestroms I, und einen Verlauf 56 der Ladung Q, d.h. des Ladungszustandes des Akkumulators 10. Man erkennt, dass der Akkumulator 10 zunächst mit einem konstanten Strom I = I₁ geladen wird, wodurch die Ladung Q allmählich von Null ansteigt. Gleichzeitig steigt die Spannung von anfänglich U = U₁ ebenfalls an, bis sie zum Zeitpunkt t₁ einen vorbestimmten Grenzwert von U = U₂ erreicht. Zu diesem Zeitpunkt ist der Akkumulator 10 erst auf einen Wert Q = Q₁ aufgeladen. Ab diesem Augenblick wird der Strom I auf konstante Spannung U₂ geregelt, so dass er langsam auf Null absinkt, während die Ladung Q sich einem Grenzwert Q₂ nähert.

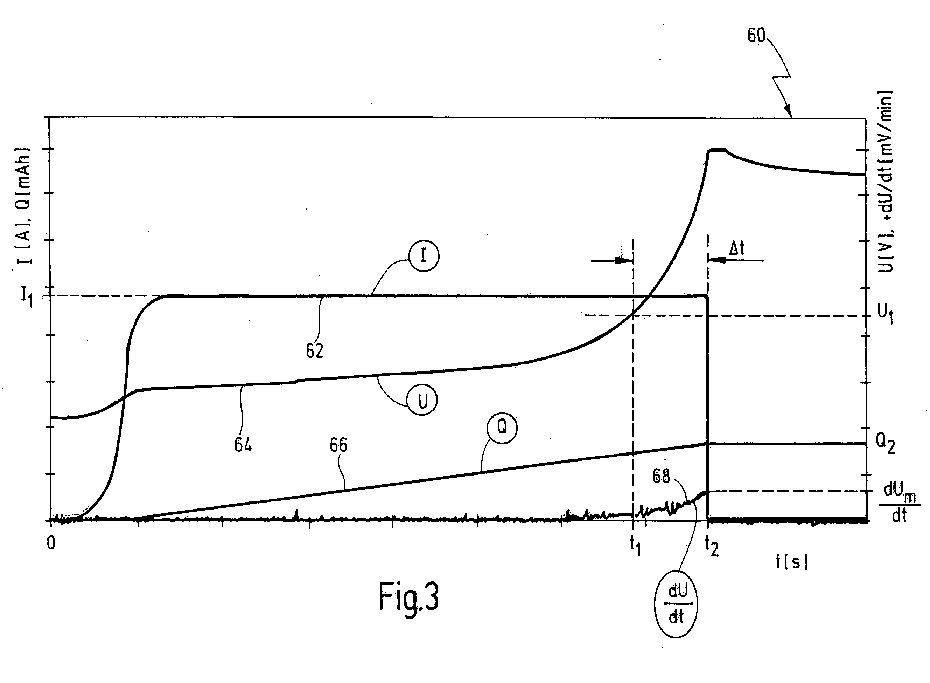

Figur 3 zeigt demgegenüber ein Ausführungsbeispiel des erfindungsgemäßen Verfahrens mit einem Diagramm 60, das einen Verlauf 62 des Ladestroms I, einen Verlauf 64 der Ladespannung U, einen Verlauf 66 der Ladung Q sowie einen Verlauf 68 der ersten zeitlichen Ableitung der Spannung dU/dt enthält.

Hier wird der Strom I allmählich von Null auf einen Wert I₁ hochgefahren und bleibt dann konstant, bis zu einem Zeitpunkt t₁ erkannt wird, dass die Spannung U einen vorbestimmten Grenzwert U₁ erreicht hat. Nun wird - im Gegensatz zur herkömmlichen Vorgehensweise gemäß Figur 2 - der Strom I weiter konstant in den Akkumulator 10 eingespeist. Dabei wird nun der zeitliche Anstieg dU/dt überwacht, bis zu einem Zeitpunkt t₂ erkannt wird, dass auch hier ein Grenzwert dUₘ/dt erreicht ist. Erst jetzt wird der Strom I heruntergefahren. Wie man aus dem Verlauf 64 der Spannung U erkennen kann, hat sich in dem zusätzlichen Zeitintervall Δt zwischen dem Erreichen der beiden Grenzwerte U₁ und dU/dt₁ die Spannung U noch einmal deutlich erhöht, was aber für den Akkumulator 10 kein Risiko darstellt, insbesondere bei einer Bauart Lithium-Eisen-Phosphat.

Der Ladevorgang ist hier zum Zeitpunkt t₂ mit einer Ladung von 100 % abgeschlossen. Der Strom I wird zu diesem Zeitpunkt schlagartig auf Null abgesenkt.

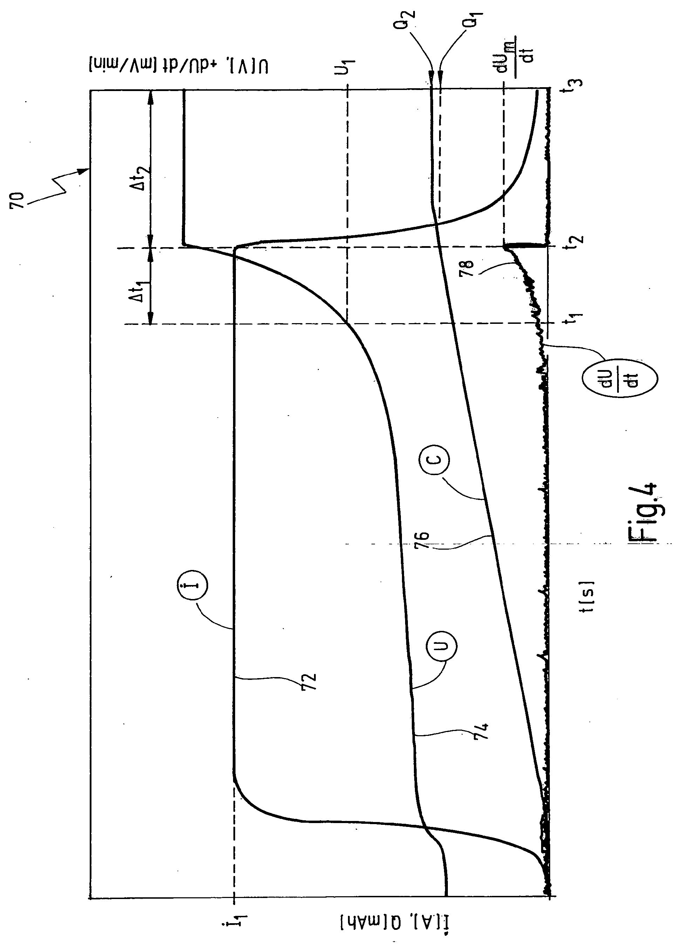

Figur 4 schließlich zeigt in gleichem Maßstab einen Ladevorgang ähnlich Figur 3, jedoch für einen anderen Akkumulator und ein etwas anderes Ladeverfahren. In Figur 4 sind die Bezugszeichen gegenüber denen von Figur 3 um 10 erhöht. Im übrigen gelten die Ausführungen zu Figur 3 auch für Figur 4.

Beim Ausführungsbeispiel der Figur 4 ist der Ladevorgang zum Zeitpunkt t₂ noch nicht abgeschlossen. Er ist vielmehr so geführt, dass der Akkumulator zum Zeitpunkt t₂ erst zu beispielsweise 95 % geladen ist. Ein weiterer Anstieg der Ladung Q von der zum Zeitpunkt t₂ nach dem Zeitintervall Δt₁ ereichten Ladung Q₁ von beispielsweise 95 % auf Q₂ von 100 % wird erst in einem nachfolgenden Zeitintervall Δt₂ vom Zeitpunkt t₂ bis zum vollständigen Abschluss des Ladevorganges bei t₃ erreicht. Im Zeitintervall Δt₂ wird der Strom I zu diesem Zweck allmählich gegen Null vermindert. Diese Vorgehensweise erlaubt eine noch schonendere Aufladung des Akkumulators.

Weil in der Überwachungselektronik 22 geeignete Mittel vorgesehen sind, um Signale zu bilden, die dem Ladestrom I, der Ladespannung U, dem Innenwiderstand Rᵢ der Zellen 22a-22n, der Temperatur T der Zellen 22a-22n und ggf. weiteren Parametern entsprechen, die für den Ladezustand des Akkumulators charakteristisch sind, kann das vorstehend geschilderte Verfahren anstatt der zeitlichen Änderung, insbesondere des zeitlichen Anstiegs der Spannung dU/dt, auch beispielsweise dT/dt oder dRᵢ/dt verarbeiten. Dabei können auch mehrere derartige Verläufe parallel verarbeitet werden, und der Strom I wird dann heruntergefahren, wenn der erste dieser Verläufe seinen Grenzwert erreicht.

## Patentansprüche

1. Verfahren zum Laden von wiederaufladbaren Lithium-Akkumulatoren (10), bei dem ein Ladestrom (I) in den Akkumulator (10) eingespeist und während der Einspeisung die Spannung (U) am Akkumulator (10) überwacht wird, **dadurch gekennzeichnet, dass** die zeitliche Änderung mindestens einer der den Akkumulator (10) charakterisierenden Zustandsgrößen überwacht und der Ladestrom (I) weiter in den Akkumulator (10) eingespeist wird, bis die zeitliche Änderung der Zustandsgröße einen vorgegebenen Grenzwert überschreitet.

2. Verfahren nach Anspruch 1, **dadurch gekennzeichnet, dass** der Ladestrom entlang eines vorgegebenen Verlaufs geführt wird.

3. Verfahren nach Anspruch 2, **dadurch gekennzeichnet, dass** der Ladestrom konstant gehalten wird, periodisch geformt wird oder gepulst wird.

4. Verfahren nach einem der vorhergehenden Ansprüche, **dadurch gekennzeichnet, dass** die zeitliche Änderung einer den Akkumulator charakterisierenden Zustandsgröße, vorzugsweise die zeitliche Änderung der Spannung (dU/dt), der Temperatur (dT/dt) oder des Innenwiderstandes (dRᵢ/dt) überwacht wird.

5. Verfahren nach einem der vorhergehenden Ansprüche, **dadurch gekennzeichnet, dass** mindestens zwei Zustandsgrößen des Akkumulators (10) gleichzeitig überwacht werden und dass der Ladestrom (I) weiter in den Akkumulator (10) eingespeist wird, bis eine der zeitlichen Änderungen der mindestens zwei Zustandsgrößen als erste den ihr zugeordneten vorgegebenen Grenzwert überschreitet.

6. Verfahren nach einem der vorhergehenden Ansprüche, **dadurch gekennzeichnet, dass** der zeitliche Anstieg der Zustandsgröße überwacht wird, vorzugsweise der zeitliche Anstieg der Spannung (dU/dt), der Temperatur (dT/dt) oder des Innenwiderstandes (dRᵢ/dt) des Akkumulators (10) überwacht wird.

7. Verfahren nach einem der vorhergehenden Ansprüche, **dadurch gekennzeichnet, dass** mindestens zwei Zustandsgrößen des Akkumulators (10) gleichzeitig überwacht werden und dass der Ladestrom (I) weiter in den Akkumulator (10) eingespeist wird, bis einer der zeitlichen Anstiege der mindestens zwei Zustandsgrößen als erster den ihm zugeordneten vorgegebenen Grenzwert überschreitet.

8. Verfahren nach einem der Ansprüche 4 bis 7, **dadurch gekennzeichnet, dass** der Ladestrom (I) abgeschaltet wird, wenn die zeitliche Änderung der Zustandsgröße den vorgegebenen Grenzwert überschreitet.

9. Verfahren nach einem der Ansprüche 4 bis 8, **dadurch gekennzeichnet, dass** der Ladestrom (I) allmählich gegen Null vermindert wird, wenn die zeitliche Änderung der Zustandsgröße den vorgegebenen Grenzwert überschreitet.

10. Verfahren nach einem der Ansprüche 1 bis 9, **dadurch gekennzeichnet, dass** ein Lithium-Eisen-Phosphat-Akkumulator geladen wird.

11. Verfahren nach einem oder mehreren der Ansprüche 1 bis 10, **dadurch gekennzeichnet, dass** der Akkumulator (10) zum Betreiben eines Elektrowerkzeuges ausgebildet ist.

12. Ladegerät zum Laden von wiederaufladbaren Lithium-Akkumulatoren (10), mit ersten Mitteln zum Einspeisen eines Ladestroms (I) in den Akkumulator (10), mit zweiten Mitteln zum Überwachen der Spannung (U) am Akkumulator (10) während der Einspeisung, **dadurch gekennzeichnet, dass** dritte Mittel zum zusätzlichen Überwachen der zeitlichen Änderung mindestens einer der den Akkumulator (10) charakterisierenden Zustandsgrößen vorgesehen sind und dass vierte Mittel vorgesehen sind, die den Ladestrom (I) weiter in den Akkumulator (10) einspeisen, bis die zeitliche Änderung der Zustandsgröße einen vorgegebenen Grenzwert überschreitet.

13. Ladegerät nach Anspruch 12, **dadurch gekennzeichnet, dass** Mittel vorgesehen sind, die den Ladestrom (I) abschalten, wenn die zeitliche Änderung der Zustandsgröße den vorgegebenen Grenzwert überschreitet.

14. Ladegerät nach Anspruch 13, **dadurch gekennzeichnet, dass** Mittel vorgesehen sind, die den Ladestrom (I) allmählich gegen Null vermindern, wenn die zeitliche Änderung der Zustandsgröße den vorgegebenen Grenzwert überschreitet.

15. Lithium-Akkumulator mit ersten Mitteln (14, 16) zum Anschließen des Akkumulators (10) an ein Ladegerät (12) und mit zweiten Mitteln zum Überwachen der Spannung (U) am Akkumulator (10) während der Einspeisung eines Ladestroms (I), **dadurch gekennzeichnet, dass** dritte Mittel zum zusätzlichen Überwachen der zeitlichen Änderung mindestens einer der den Akkumulator (10) charakterisierenden Zustandsgrößen vorgesehen sind und dass die dritten Mittel ein Signal zur Abgabe an das Ladegerät (12) erzeugen, um den Ladestrom (I) weiter in den Akkumulator (10) einzuspeisen, bis die zeitliche Änderung der Zustandsgröße einen vorgegebenen Grenzwert überschreitet.
